# EUROPÄISCHE PATENTANMELDUNG

(11) **EP 1 116 540 A2**
(43) Veröffentlichungstag der Anmeldung: **18.07.2001**
(21) Anmeldenummer: 00127410.9
(22) Anmeldetag: 14.12.2000
(51) Int. Cl.: B23D 51/14, B23D 49/16

(54) **Handwerkzeugmaschine**

(30) Priorität: 15.01.2000 DE 10001508
(71) Anmelder: ROBERT BOSCH GMBH, 70442 Stuttgart (DE)
(72) Erfinder: Dammertz, Ralph, 70567 Stuttgart (DE)

(57) **Zusammenfassung**

Bei einer Handwerkzeugmaschine mit einem länglichen, hin- und hergehend antreibbaren Schneidwerkzeug (13), das endseitig von jeweils einem Werkzeughalter (24) gegriffen und von einer Spannvorrichtung in Hubrichtung gespannt ist, umfaßt zum Zwecke eines schnellen beidseitigen Befestigen des Schneidwerkzeugs (13) bei guter Handhabung jeder Werkzeughalter (24) eine Führungshülse (30) und einen in der Führungshülse integrierten, eine Einstecköffnung (32) für ein Werkzeugende aufweisenden Schnellverriegelungsmechanismus (31), der beim Einstecken des Werkzeugendes automatisch verriegelt und bei gelöster Spannvorrichtung manuell entriegelbar ist. Jede Führungshülse (30) ist in einer Lagerstelle im Maschinenrahmen axial verschieblich aufgenommen (Fig. 2).

## Beschreibung

Die Erfindung geht aus von einer Handwerkzeugmaschine mit einem länglichen, hin- und hergehend antreibbaren, eine längsverlaufende Schneidkante tragenden, insbesondere flexiblen Schneidwerkzeug der im Oberbegriff des Anspruchs 1 definierten Gattung.

Bei einer eine solche Handwerkzeugmaschine darstellenden, bekannten Motorhandbügelsäge mit einem Handgriff zum Halten durch den Benutzer (US 5 442 857) ist der eine Werkzeughalter einstückig mit einer Hubstange ausgebildet und der andere Werkzeughalter in der Spannvorrichtung integriert, die einen in einer rahmenseitig festgelegten Lagerbuchse verschieblich geführten Spannbolzen und eine am Spannbolzen und Maschinenrahmen sich abstützende Druckfeder umfaßt, die auf den Spannbolzen eine vom Sägeblatt weggerichtete Spannkraft ausübt. Jeder Werkzeughalter besteht aus einer am Ende der Hubstange bzw. des Spannbolzens ausgebildeten Querbohrung und einer durch die Querbohrung hindurchsteckbaren Schraube, die durch ein endseitiges Stanzloch im Sägeblatt hindurchsteckbar und mit einer Mutter sicherbar ist.

### Vorteile der Erfindung

Die erfindungsgemäße Handwerkzeugmaschine mit den Merkmalen des Anspruchs 1 hat den Vorteil eines schnellen, beidseitigen Befestigens des Schneidwerkzeugs, wobei das Einstecken des Schneidwerkzeugs bequem von vorn erfolgt, und den Vorteil der platzsparenden Unterbringung des Schnellverriegelungsmechanismus in gleichzeitig der Führung des Werkzeughalters im Maschinenrahmen dienenden Führungshülsen. Nach dem Einstecken der Werkzeugenden rastet der Schnellverriegelungsmechanismus automatisch ein und mit Aufbringen einer Spannung auf das Schneidwerkzeug durch Aktivieren der Spannvorrichtung wird der Schnellverriegelungsmechanismus so zugezogen, daß er unter Spannung manuell nicht geöffnet werden kann.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß einer vorteilhaften Ausführungsform der Erfindung bilden die aufeinander zugekehrten Stirnseiten der Schnellverriegelungsmechanismen liegenden Einstecköffnungen für die Werkzeugenden die Mündungen jeweils eines in die axiale Tiefe des Schnellverriegelungsmechanismus sich erstreckenden Einsteckschlitzes, der an die Form des Werkzeugendes angepaßt ist. Jeder Schnellverriegelungsmechanismus weist einen schwenkbar gelagerten, federbelasteten Verriegelungshebel auf, der den Einsteckschlitz mit einer zum Einrasten in ein am Werkzeugende angeordnetes Rastloch ausgebildeten Verriegelungsnase quer durchdringt.

Gemäß einer bevorzugter Ausführungsformen der Erfindung ist der Querschnitt des Einsteckschlitzes so bemessen, daß die größte Schlitzabmessung das Werkzeugende formschlüssig, vorzugsweise mit geringem Spiel, aufnimmt, während die kleinere Schlitzabmessung des Einsteckschlitzes wenig größer ist als die Dicke der stärksten Werkzeugenden aller für den Gebrauch in der Handwerkzeugmaschine bestimmten Schneidwerkzeuge. Durch den Formschluß der größeren Abmessung des Werkzeugendes im Einsteckschlitz mit einem Spiel von weniger als 0,2mm braucht der Verriegelungsmechanismus das Schneidwerkzeug nicht mehr in dieser Richtung zu fixieren, und die Bemessung der kleineren Abmessung des Einsteckschlitzes läßt das Einführen und Festlegen von Schneidwerkzeugen unterschiedlicher Dicke zu.

Gemäß einer vorteilhaften Ausführungsform der Erfindung greift die Spannvorrichtung mit einer vom Schneidwerkzeug weggerichteten Spannkraft an der Führungshülse mindestens eines Werkzeughalters an, wobei vorzugsweise die Spannvorrichtung ein Spannseil aufweist, das endseitig in einem in der Führungshülse unverschieblich gehaltenen Seilanschlußstück befestigt ist und mittels eines vorzugsweise als Kniehebel ausgebildeten Spannhebels spannbar ist. Solange die Spannvorrichtung inaktiv ist und keine Zugkraft auf die Führungshülse ausübt, wird das Schneidwerkzeug durch die Verriegelungsnase des Verriegelungshebels gegen Herausfallen aus dem Schnellverriegelungsmechanismus gesichert. Wird die Spannvorrichtung aktiviert und damit eine Zugspannung auf den Werkzeughalter aufgebracht, so entsteht durch die Lage des Drehpunkts des Verriegelungshebels ein Moment auf diesen, das den Verriegelungshebel weiter verdreht, so daß dieser das Schneidwerkzeug gegen die eine Kante des Einsteckschlitzes drückt. Dieses Moment verhindert damit zuverlässig, daß der Schnellverriegelungsmechanismus im gespannten Zustand des Schneidwerkzeugs manuell gelöst werden kann.

Gemäß einer bevorzugten Ausführungsform der Erfindung weist jeder Schnellverriegelungsmechanismus ein den Einsteckschlitz tragendes Basisteil auf, das in der Führungshülse festgelegt ist. Das Basisteil weist eine rechtwinklig zum Einsteckschlitz bis hin zum Einsteckschlitz verlaufende Ausnehmung, in der der Verriegelungshebel schwenkbar einliegt, und eine parallel zum Einsteckschlitz sich erstreckende Bohrung zur Aufnahme eines den Verriegelungshebel tragenden Lagerbolzens auf. Durch diese konstruktive Gestaltung läßt sich der Schnellverriegelungsmechanismus fertigungstechnisch sehr einfach und zu geringen Gestehungskosten herstellen und besteht nur aus wenigen Teilen, die sich teilweise durch einfaches Stanzen herstellen lassen.

Gemäß einer bevorzugten Ausführungsform der Erfindung ist jeder Schnellverriegelungsmechanismus in der Führungshülse mit Spiel axial unverschieblich und um seine Längsachse drehbar aufgenommen und in Drehwinkelschritten verrastbar. Durch diese konstruktive Gestaltung ist es möglich, den gesamten Verriegelungsmechanismus in der Führungshülse und damit das Schneidwerkzeug bezüglich des Maschinenrahmens, in definierten Drehwinkelschritten, die vorzugsweise mit 45° festgelegt sind, zu verdrehen. Wird die Spannvorrichtung aktiviert, so ist eine weitere Verdrehung der das Schneidwerkzeug greifenden Schnellverriegelungsmechanismen blockiert.

Zur Realisierung dieser Schwenkbeweglichkeit der Schnellverriegelungsmechanismen ist gemäß einer vorteilhaften Ausführungsform der Erfindung die mit Spiel axial unverschiebliche Festlegung des Schnellverriegelungsmechanismus in der Führungshülse mittels mindestens zweier, um gleiche Umfangswinkel in der Führungshülse versetzt angeordneter Radialstifte und einer in das Basisteil eingebrachten Ringnut mit einer gegenüber dem Durchmesser der Radialstifte größeren Nutbreite vorgenommen, in die die Radialstifte eintauchen. Die vom Einsteckschlitz am weitesten entfernt liegende Nutflanke der Ringnut ist mit um Drehwinkel zueinander versetzten, radialen Rastnuten versehen, in denen die Radialstifte mit ihrem in die Ringnut eintauchenden Stiftabschnitt formschlüssig einliegen.

Gemäß einer alternativen Ausführungsform ist die die radialen Rastnuten tragende Nutflanke der Ringnut im Basisteil von einer Scheibenfläche eine an der Stirnseite des Basisteils befestigten separaten Rastscheibe gebildet.

Gemäß einer vorteilhaften Ausführungsform der Erfindung wirkt auf das Basisteil bzw. auf die Rastscheibe eine zu den Radialstiften hin gerichtete Federkraft ein. Diese axiale Federkraft wird vorzugsweise von einem an der Führungshülse einerseits und an dem Basisteil bzw. an der Rastscheibe andererseits sich abstützenden Federring erzeugt. Diese Federkraft verhindert ein ungewolltes Verdrehen des Schnellverriegelungsmechanismus bei ungespanntem Schneidwerkzeug und verbessert das Handling beim Einsetzen, Einstellen (Verdrehen) und Spannen des Schneidwerkzeugs.

Ein Schneidwerkzeug zum Einsetzen in die beschriebene Handwerkzeugmaschine ist an seinen beiden Werkzeugenden mit Anfasungen versehen, die das Einführen des Schneidwerkzeugs in die Einsteckschlitze erleichtern. In jedem Werkzeugende ist im Abstand von der quer zur Längsachse des Werkzeugs sich erstreckenden Begrenzungskante des Werkzeugs ein Rastloch eingebracht, das eine parallel zur Begrenzungskante verlaufende, gerade Hintergreifungskante für die Verriegelungsnase aufweist. Ist das Schneidwerkzeug ein Sägeblatt für die als Motorhandbügelsäge ausgebildete Handwerkzeugmaschine, so wird das Rastloch durch eine quadratische oder rechteckförmige Ausstanzung im Sägeblatt nahe dessen Blattenden realisiert.

### Zeichnung

Die Erfindung ist anhand eines in der Zeichnung dargestellten Ausführungsbeispiels im folgenden näher beschrieben. Es zeigen:
- Fig. 1: einen Längsschnitt einer Motorhandbügelsäge,
- Fig. 2: einen Längsschnitt eines Werkzeughalters in der Motorhandbügelsäge längs der Linie II-II in Fig. 3,
- Fig. 3: einen Schnitt längs der Linie III-III in Fig. 2,
- Fig. 4: einen Schnitt eines Basisteils des Schnellverriegelungsmechanismus im Werkzeughalter längs der Schnittlinie II-II in Fig. 3,
- Fig. 5: einen Schnitt des Basisteils längs der Linie V-V in Fig. 4,
- Fig. 6: eine Draufsicht einer Rastscheibe des Verriegelungsmechanismus im Werkzeughalter gemäß Fig. 2,
- Fig. 7: eine gleiche Darstellung wie in Fig. 4 des Basisteils gemäß einer weiteren Ausführungsform,
- Fig. 8: einen Schnitt längs der Linie VIII-VIII in Fig. 7,
- Fig. 9: ausschnittweise eine Draufsicht des Sägeblatts der Motorhandbügelsäge in Fig. 1.

### Beschreibung des Ausführungsbeispiels

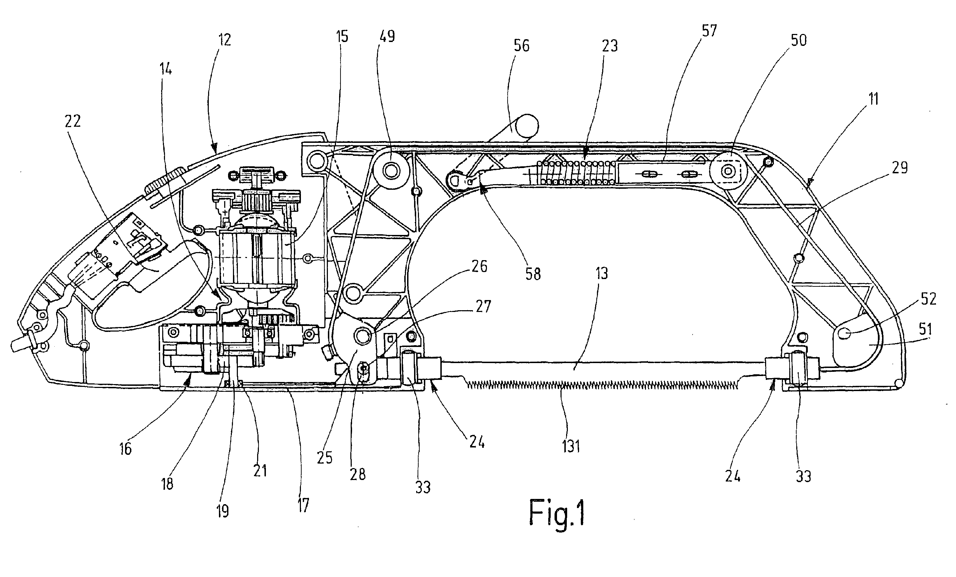

Die in Fig. 1 im Längsschnitt dargestellte Motorhandbügelsäge als Ausführungsbeispiel für eine Handwerkzeugmaschine mit einem länglichen, hin- und hergehenden antreibbaren und eine längsverlaufende Schneidkante tragenden, insbesondere flexiblen Schneidwerkzeug weist einen bügelförmigen Maschinenrahmen 11 auf, der an seiner einen Seite mit einem Griffgehäuse 12 verbunden ist. Das flache, längliche Sägeblatt 13 als Ausführungsbeispiel für das Schneidwerkzeug mit einer die Schneidkante 131 bildenden Verzahnung erstreckt sich zwischen den Bügelenden des bügelförmigen Maschinenrahmens 11 und wird von einer im Griffgehäuse 12 aufgenommenen, motorischen Antriebsvorrichtung 14 zu einer hin- und hergehenden Hubbewegung angetrieben. Die motorische Antriebsvorrichtung 14 umfaßt in bekannter Weise einen Elektromotor 15 und ein Getriebe 16, das die Rotation der Abtriebswelle des Elektromotors 15 in eine oszillierende Hubbewegung eine am Getriebeausgang angelenkten Hubstange 17 umsetzt. Hierzu greift ein an einem Abtriebsrad 18 des Getriebes 16 exentrisch angeordneter Stift 19 in eine in der Hubstange 17 ausgebildete, quer zu deren Hubrichtung sich erstreckende, langlochartige Ausnehmung. Der Stift 19 ist mittels eines Kugellagers 21 an den parallelen Längskanten der Ausnehmung reibungsarm geführt. Ein am Griffgehäuse 12 vorstehender Drucktaster 22 dient zum Ein- und Ausschalten des Elektromotors 15.

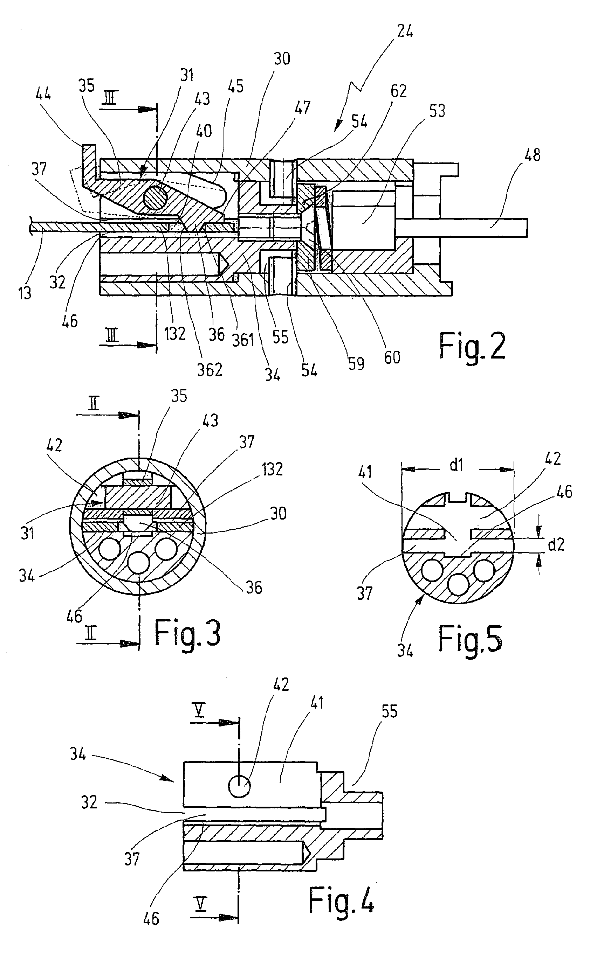

Der bügelförmige Maschinenrahmen 11 ist, wie hier nicht weiter dargestellt ist, aus zwei Schalen zusammengesetzt, die miteinander verschraubt sind und im Innern die Mechanik zum Antrieb und zur Spannung des Sägeblatts 13 aufnehmen. Das Sägeblatt 13 ist an seinen beiden Enden in je einem Werkzeughalter 24 festgelegt und mittels einer Spannvorrichtung 23 in Längsrichtung gespannt. Der in Fig. 1 linke Werkzeughalter 24 ist mit einer Schwinge 25 verbunden, die auf einer Achse 26 im Maschinenrahmen 11 drehbar gelagert und über einen mit einem Langloch 28 geführten Bolzen 27 mit dem Werkzeughalter 24 und der Hubstange 19 gekoppelt ist. Bis auf die Tatsache, daß der in Fig. 1 linke Werkzeughalter 24 von der Hubstange 19 angetrieben ist und am rechten Werkzeughalter 24 die Spannvorrichtung 23 über ein Spannseil 29 angreift, sind die beiden Werkzeughalter 24 identisch ausgebildet, so daß nachfolgend nur der in Fig. 1 rechte Werkzeughalter 24 beschrieben wird, der in Fig. 2 - 5 in verschiedenen Schnitten dargestellt ist.

Der in Fig. 2 im Längsschnitt und in Fig. 3 im Querschnitt dargestellte Werkzeughalter 24 weist eine Führungshülse 30 und einen in der Führungshülse 30 integrierten Schnellverriegelungsmechanismus 31 mit einer Einstecköffnung 32 für ein Sägeblattende 132 des Sägeblatts 13 auf. Der Schnellverriegelungsmechanismus 31 ist so ausgebildet, daß er beim Einstecken des Sägeblattendes 132 automatisch verriegelt und bei gelöster Spannvorrichtung 23 manuell entriegelbar ist. Die beiden Werkzeughalter 24 sind mit ihren Führungshülsen 30 in zwei miteinander fluchtenden, voneinander beabstandeten Lagerstellen 33 im Maschinenrahmen 11 axial verschieblich aufgenommen. Im Ausführungsbeispiel der Fig. 1 besteht jede Lagerstelle 33 aus einer Lagerbuchse, in welcher die Führungshülse 30 gleitgelagert ist.

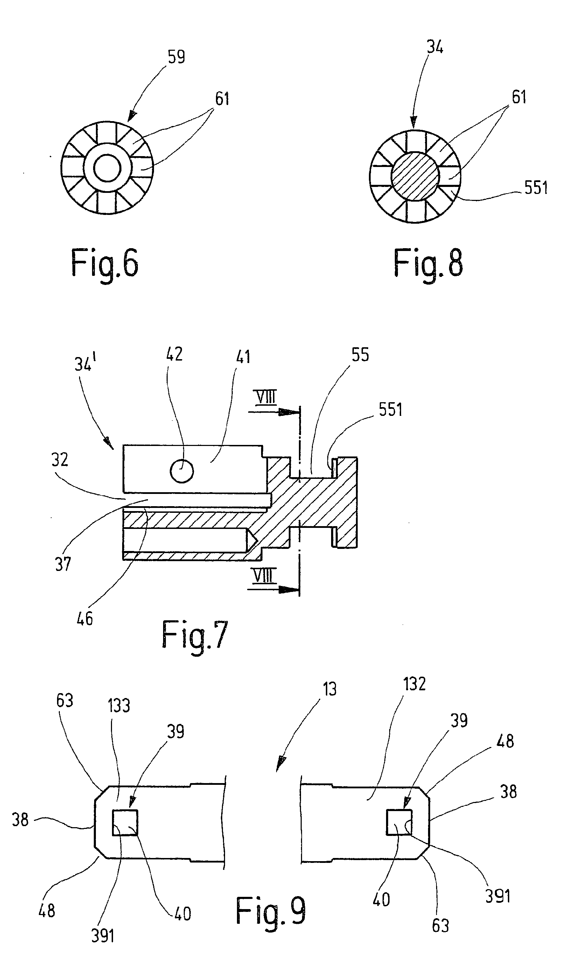

Der Schnellverriegelungsmechanismus 31 umfaßt ein Basisteil 34 und einen Verriegelungshebel 35 mit einer Verriegelungsnase 36, der im Basisteil 34 schwenkbar gelagert ist. Die Einstecköffnung 32 bildet die Mündung eines in die axiale Tiefe des Basisteils 34 sich erstreckenden Einsteckschlitzes 37, der an die Form des Sägeblattendes 132 angepaßt ist. Der Querschnitt des Einsteckschlitzes 37 ist dabei so bemessen, daß die größte Schlitzabmessung dl (Fig. 5) das Sägeblattende 132 in dessen größten Breite mit geringem Spiel formschlüssig aufnimmt (vgl. Fig. 3), während die kleinere Abmessung d2 (Fig. 5) des Einsteckschlitzes 37 wenig größer bemessen ist als die Dicke des stärksten Sägeblattendes 132 aller für den Gebrauch in der Motorhandbügelsäge bestimmten Sägeblätter 13. Wie Fig. 9 zeigt, sind die Sägeblattenden 132 und 133 mit Anfasungen 48 versehen, die das Einführen der Sägeblattenden 132 und 133 in die Einsteckschlitze 37 erleichtert. Im Abstand von der quer zur Längsachse des Sägeblatts 13 verlaufenden äußeren Begrenzungskante 38 ist in jedem Sägeblattende 132 und 133 ein Rastloch 39 mit einer zur Begrenzungskante 38 des Sägeblattendes 132 bzw. 133 parallelen, geraden Hintergreifungskante 391 ausgebildet. Im Ausführungsbeispiel der Fig. 9 wird das Rastloch 39 mit Hintergreifungskante 391 von einer quadratischen oder rechteckförmigen Ausstanzung 40 im Sägeblatt 13 gebildet.

Zur schwenkbaren Lagerung des Verriegelungshebels 35 im Basisteil 34 ist letzteres mit einer zum Einsteckschlitz 37 rechtwinkligen, bis zum Einsteckschlitz 37 hin verlaufenden Ausnehmung 41 sowie mit einer sich parallel zum Einsteckschlitz 37 erstreckenden Bohrung 42 versehen (vgl. Fig. 4 und 5). Der Verriegelungshebel 35 ist mit einem Lagerbolzen 43 in der Bohrung 42 schwenkbeweglich aufgenommen und liegt selbst schwenkbar in der Ausnehmung 41 ein (vgl. Fig. 3), wobei er mit seiner Verriegelungsnase 36 den Einsteckschlitz 37 durchdringt. Wie Fig. 2 zeigt, ist der Verriegelungshebel 35 zweiarmig ausgebildet und trägt an seinem einen Hebelarmende die Verriegelungsnase 36, während er mit seinem anderen Hebelarmende aus der Führungshülse 30 zum manuellen Schwenken des Verriegelungshebels 35 herausragt und hierzu endseitig eine Grifftaste 44 trägt. Eine Drahtfeder 45 stützt sich einerseits an der Innenwand der Führungshülse 30 und andererseits an dem die Verriegelungsnase 36 tragenden Hebelarm des Verriegelungshebels 35 ab und spannt den Verriegelungshebel 35 in Richtung zum Einsteckschlitz 37 hin vor. Bei fehlendem Sägeblatt 13 taucht unter der Wirkung der Drahtfeder 45 die Verriegelungsnase 36 in eine Längsnut 46 ein, die in dem der Ausnehmung 41, die den Verriegelungshebel 35 aufnimmt, gegenüberliegenden Wandbereich des Einsteckschlitzes 37 ausgebildet ist. Am vorderen Ende des die Verriegelungsnase 36 tragenden Hebelarms ist eine Auflagefläche 47 ausgebildet, die bis hin zu einer Verriegelungskante 361 der Verriegelungsnase 361 der Verriegelungsnase 36 und rechtwinklig zu dieser verläuft. Die Höhe der Verriegelungskante 361, die bei eingestecktem Sägeblattende 132 die Hintergreifungskante 391 des Rastloches 39 hintergreift, und damit die Höhe der Verriegelungsnase 36 ist gleich oder wenig größer bemessen als die Dicke eines in den Einsteckschlitz 35 eingesteckten Sägeblattendes 132 eines Sägeblattes 13 mit mittlerer Sägeblattdicke. Bei in den Einsteckschlitz 37 eingeschobenem Sägeblattende 132 legt sich die Auflagefläche 47 unter der Wirkung der Drahtfeder 45 auf das Sägeblattende 132 auf, wobei die Längsnut 46 sicherstellt, daß auch bei dünneren Sägeblättern 13 die Anpressung des Verriegelungshebels 35 an das Sägeblattende 132 durch die Möglichkeit des Eintauchens der Verriegelungsnase 36 in die Längsnut 46 gegeben ist.

Wird das Sägeblattende 132 in den Einsteckschlitz 37 im Basisteil 34 eingeschoben, so wird der Verriegelungshebel 35 über eine an der Verriegelungsnase 36 ausgebildete Anhebeschräge 362 gegen die Federkraft der Drahtfeder 45, in Fig. 2 entgegen Uhrzeigersinn, geschwenkt, bis schließlich die Verriegelungsnase 36 unter der Federkraft der Drahtfeder 45 in die Ausstanzung 40 im Sägeblattende 132 einfällt und die Auflagefläche 47 des Verriegelungshebels 35 von der Federkraft der Drahtfeder 45 auf das Sägeblattende 132 gedrückt wird. Wird der Verriegelungshebel 35 mittels der Grifftaste 44 von Hand in Fig. 2 gegen Uhrzeigersinn geschwenkt, so wird die Verriegelungsnase 36 wieder aus der Ausstanzung 40 ausgehoben, und das Sägeblattende 132 kann wieder aus dem Werkzeughalter 24 herausgezogen werden. Das manuelle Schwenken des Verriegelungshebels 35 über die Grifftaste 44 ist nur möglich, so lange das Sägeblatt 13 noch nicht gespannt ist, also bei noch nicht aktivierter Spannvorrichtung 23.

Zum Spannen des Sägeblatts 13 nach Einsetzen der Sägeblattenden 132 und 133 in die beiden Werkzeughalter 24 weist die Spannvorrichtung 23 ein Spannseil 29 auf, das im Maschinenrahmen 11 über zwei Umlenkrollen 49 und 50 und ein Führungsglied 51 geführt ist und endseitig einerseits an der Schwinge 25 und andererseits an der Führungshülse 30 des in Fig. 1 rechten Werkzeughalters 24 befestigt ist. Das Führungsglied 51 ist am Maschinenrahmen 11 um eine Achse 52 schwenkbar gelagert. Das in den Werkzeughalter 24 hineinlaufende Seilende ist an einem Seilanschlußstück 53 befestigt (Fig. 2), das seinerseits an der Führungshülse 30 axial unverschieblich festgelegt ist. Das Basisteil 34 ist in der Führungshülse 30 mit Spiel axial unverschieblich festgelegt, wozu zwei in der Führungshülse 30 diametral angeordnete Radialstifte 54 in eine in dem Basisteil 34 vorhandene Ringnut 55 eintauchen, deren Nutbreite etwas größer bemessen ist als der Außendurchmesser der Radialstifte 54 (Fig. 2). Das Spannseil 29 kann mittels eines Spannhebels 56 gestrafft und damit das Sägeblatt 13 gespannt werden. Hierzu ist die Umlenkrolle 50 auf einem Rollenträger 57 gelagert, und durch Umlegen des Spannhebels 56 in seine in Fig. 1 dargestellte Endlage wird über eine Art Kniehebelanordnung 58 der Rollenträger 57 verschoben und dadurch das Seil 29 gespannt. Durch die Zugkraft des Spannseils 29 wird über das Basisteil 34 und den Verriegelungshebel 35 eine Zugkraft auf das Sägeblatt 13 aufgebracht. Durch die Lage des Drehpunktes des Verriegelungshebels 35 entsteht dabei ein Drehmoment, das den Verriegelungshebel 35 weiter im Uhrzeigersinn in Fig. 1 verdreht und damit die Auflagefläche 47 am Verriegelungshebel 35 auf das Sägeblatt 13 zunehmend aufpreßt. Dieser Drehmoment verhindert, daß der Schnellverriegelungsmechanismus 31 über die Grifftaste 44 gelöst werden kann.

Um das Sägeblatt 13 relativ zu dem Maschinenrahmen 11 um seine Längsachse stufig verdrehenzu können, so daß Sägeschnitte in erschwert zugänglichen Bereich durchgeführt werden können, ist der Schnellverriegelungsmechanismus 31 in der Führungshülse 30 um seine Längsachse drehbar aufgenommen und in Drehwinkelschritten verrastbar. Hierzu ist die von dem Einsteckschlitz 37 am weitesten entfernt liegende Nutflanke 551 durch die Scheibenfläche einer Rastscheibe 59 gebildet, die mittels einer Schraube 60 auf die von der Einstecköffnung 32 abgekehrte Stirnseite des Basisteils 34 aufgeschraubt ist (Fig. 2). Die die Nutflanke 551 bildende Scheibenfläche der Rastscheibe 59 ist mit acht, um jeweils 45° Drehwinkel gegeneinander versetzt angeordnete, radiale Rastnuten 61 versehen (Fig. 6), in denen die beiden Radialstifte 54 mit ihrem in die Ringnut 55 eintauchenden Stiftabschnitt formschlüssig einzuliegen vermögen. Ein Federring 62 sorgt dabei für eine Andruckkraft, welche die mit dem Basisteil 34 fest verbundene Rastscheibe 59 an die beiden Radialstifte 54 anpreßt. Zum Herstellen einer Schwenkstellung des Sägeblatts 13 gegenüber dem Maschinenrahmen 11 wird bei deaktivierter Spannvorrichtung 23 das Basisteil 34 in Fig. 2 leicht nach rechts verschoben und gleichzeitig um den gewünschten Verdrehwinkel gedreht. Nach Loslassen des Basisteils 34 drückt der Federring 62 die Rastscheibe 59 gegen die Radialstifte 54. Wird nunmehr die Spannvorrichtung 23 durch Umlegen des Spannhebels 56 aktiviert, so werden die Radialstifte 54 durch die auf die Führungshülse 30 aufgebrachte Zugkraft in die Rastnuten 61 der Rastscheibe 59 hineingepreßt, und das Basisteil 34 ist gegen weitere Verdrehung zuverlässig verriegelt.

Das in Fig. 7 dargestellte modifizierte Basisteil 34' unterscheidet sich von dem vorstehend beschriebenen Basisteil 34 lediglich dadurch, daß die Rastscheibe einstückig mit dem Basisteil 34 ausgeführt ist, die radialen Rastnuten 61 also unmittelbar in die Nutflanke 551 der in dem Basisteil eingearbeiteten Ringnut 55 ausgefräst sind. Diese Rastnuten 61 sind in der Schnittdarstellung der Fig. 8 zu sehen, wobei wiederum acht radiale Rastnuten 61 um jeweils 45° in Umfangsrichtung gegeneinander versetzt sind.

## Patentansprüche

1. Handwerkzeugmaschine mit einem länglichen, hin- und hergehend antreibbaren, eine längsverlaufende Schneidkante (131) tragenden, insbesondere flexiblen Schneidwerkzeug (13), das endseitig von jeweils einem Werkzeughalter (24) gegriffen ist, von einer Spannvorrichtung (23) in Hubrichtung gespannt und in einem Maschinenrahmen (11) längsverschieblich geführt ist, dadurch gekennzeichnet, daß jeder Werkzeughalter (24) eine Führungshülse (30) und einen in der Führungshülse (30) integrierten, eine Einstecköffnung (32) für ein Werkzeugende (132,133) aufweisenden Schnellverriegelungsmechanismus (31) umfaßt, der beim Einstecken des Werkzeugendes (132,133) automatisch verriegelt und bei gelöster Spannvorrichtung (23) manuell entriegelbar ist, und daß die Werkzeughalter (24) mit ihren Führungshülsen (30) in zwei miteinander fluchtenden, voneinander beabstandeten Lagerstellen (33) im Maschinenrahmen axial verschieblich aufgenommen sind.

2. Handwerkzeugmaschine nach Anspruch 1, dadurch gekennzeichnet, daß die auf einander zugekehrten Stirnseiten der Schnellverriegelungsmechanismen (31) liegenden Einstecköffnungen (32) die Mündungen jeweils eines in die axiale Tiefe des Schnellverriegelungsmechanismus (31) sich erstreckenden Einsteckschlitzes (37) bilden, der an die Form des Werkzeugendes (132,133) angepaßt ist, und daß jeder Schnellverriegelungsmechanismus (31) einen schwenkbar gelagerten, federbelasteten Verriegelungshebel (35) aufweist, der den Einsteckschlitz (37) mit einer zum Einrasten in ein am Werkzeugende (132,133) angeordnetes Rastloch (39) ausgebildeten Verriegelungsnase (36) quer durchdringt.

3. Handwerkzeugmaschine nach Anspruch 1 oder 2, dadurch gekennzeichnet, daß die Spannvorrichtung (23) mit einer vom Schneidwerkzeug (13) weggerichteten Spannkraft an der Führungshülse (30) mindestens eines Werkzeughalters (24) angreift.

4. Handwerkzeugmaschine nach Anspruch 2 oder 3, dadurch gekennzeichnet, daß der Schnellverriegelungsmechanismus (31) ein den Einsteckschlitz (37) tragendes Basisteil (34) aufweist, das in der Führungshülse (30) festgelegt ist, und daß das Basisteil (34) eine rechtwinklig zum Einsteckschlitz (37) bis hin zu diesem verlaufende Ausnehmung (41), in der der Verriegelungshebel (35) schwenkbar einliegt, und eine sich parallel zum Einsteckschlitz (37) erstreckende Bohrung (42) zur Aufnahme eines den Verriegelungshebel (35) tragenden Lagerbolzens (43) aufweist.

5. Handwerkzeugmaschine nach Anspruch 4, dadurch gekennzeichnet, daß der Verriegelungshebel (35) zweiarmig ausgebildet ist und an seinem einen Hebelarmende die Verriegelungsnase (16) trägt und mit seinem anderen Hebelarmende aus der Führungshülse (30) zum manuellen Schwenken des Verriegelungshebels (35) greifbar herausragt und daß auf den die Verriegelungsnase (36) tragenden Hebelarm eine den Verriegelungshebel (35) hin zum Einsteckschlitz (37) belastende Vorspannkraft einwirkt, die vorzugsweise die Federkraft eine zwischen dem Hebelarm und der Führungshülse (30) sich abstützenden Drahtfeder (45) ist.

6. Handwerkzeugmaschine nach Anspruch 5, dadurch gekennzeichnet, daß in dem Wandbereich des Einsteckschlitzes (37), der der den Verriegelungshebel (35) aufnehmenden Ausnehmung (41) gegenüberliegt, eine Längsnut (46) zum Eintauchen der Verriegelungsnase (36) eingebracht ist, daß der Verriegelungshebel (35) am vorderen Ende des die Verriegelungsnase (36) tragenden Hebelarms eine rechtwinklig zu einer Verriegelungskante (361) der Verriegelungsnase (36) sich erstreckende, bis hin zur Verriegelungskante (361) reichende Auflagefläche (47) trägt und daß die Höhe der Verriegelungskante (361) in etwa der mittleren Dicke des in den Einsteckschlitz (37) eindringenden Werkzeugendes (132,133) aller für den Gebrauch in der Handwerkzeugmaschine bestimmten Schneidwerkzeuge (13) bemessen ist.

7. Handwerkzeugmaschine nach einem der Ansprüche 1 - 6, dadurch gekennzeichnet, daß der Schnellverriegelungsmechanismus (31) in der Führungshülse (30) mit Spiel axial unverschieblich und um seine Längsachs drehbar aufgenommen und in Drehwinkelschritten verrastbar ist.

8. Handwerkzeugmaschine nach Anspruch 7, dadurch gekennzeichnet, daß in der Führungshülse (30) mindestens zwei, um gleiche Umfangswinkel zueinander versetzt angeordnete Radialstifte (54) angeordnet sind, die in eine im Basisteil (34) eingebrachte Ringnut (55) mit einer gegenüber dem Durchmesser der Radialstifte (54) größeren Nutbreite eintauchen, und daß die von der Einstecköffnung (32) am weitesten entfernt liegende Nutflanke (551) der Ringnut (55) mit um Drehwinkel zueinander versetzt angeordnete, radiale Rastnuten (61) versehen ist, in denen die Radialstifte (54) mit ihren in die Ringnut (55) eintauchenden Stiftabschnitten formschlüssig einliegen.

9. Handwerkzeugmaschine nach einem der Ansprüche 1 - 8, gekennzeichnet durch ihre Ausbildung als Motorhandbügelsäge, deren Maschinenrahmen (11) von einem Bügel und deren Schneidwerkzeug von einem Sägeblatt (13) gebildet ist, das sich zwischen den Bügelenden erstreckt.

10. Schneidwerkzeug zum Einsetzen in eine Handwerkzeugmaschine nach einem der Ansprüche 1 - 9, dadurch gekennzeichnet, daß die Werkzeugenden (132,133) mit Anfasungen (48) versehen sind und in jedem Werkzeugende (132,133) im Abstand von dessen äußeren, quer zu Längsachse des Werkzeugs (13) sich erstreckenden Begrenzungskante (38) ein Rastloch (39) mit einer zur Begrenzungskante (38) parallelen Hintergreifungskante (391) angeordnet ist.
